# EUROPÄISCHE PATENTSCHRIFT

(11) **EP 2 848 812 B1**
(45) Veröffentlichungstag und Bekanntmachung des Hinweises auf die Patenterteilung: **22.11.2017**
(21) Anmeldenummer: 14184204.7
(22) Anmeldetag: 10.09.2014
(51) Int. Cl.: F04B 45/02, B65G 47/91

(54) **Saug-Hebevorrichtung zur Manipulation von Gegenständen in z. B. Werkstätten**
Suction lifting device for manipulating objects, e.g. in workshops
Dispositif de levage/d'aspiration destiné à la manipulation d'objets, par exemple dans des ateliers

(30) Priorität: 12.09.2013 DE 102013015055
(43) Veröffentlichungstag der Anmeldung: 18.03.2015
(73) Patentinhaber: eta opt GmbH, 34127 Kassel (DE)
(72) Erfinder: Pohl, Christoph, 34560 Fritzlar (DE)
(74) Vertreter: Patentanwälte Walther Hinz Bayer PartGmbB

(56) Entgegenhaltungen:
- WO-A1-00/66481
- DE-B3-102009 044 268
- FR-A1- 2 666 853

## Beschreibung

Die Erfindung betrifft eine Saug-Hebevorrichtung zur Manipulation von Gegenständen in z. B. Werkstätten oder bei industriellen Anwendungen im Bereich der Antriebs- und Handhabungstechnik.

Aus der GB 2 395 237 A ist eine Vakuumpumpe bekannt, die zweistufig ausgebildet ist, um ein höheres Vakuum ziehen zu können.

Saug-Hebevorrichtungen zur Manipulation von Gegenständen sind aus dem Stand der Technik bekannt. Bekannt sind hierbei insbesondere druckluftbetriebene Kolbenzylinderantriebe mit endseitig angeordnetem Saugnapf, um durch Erzeugung eines Unterdrucks im Bereich des Saugnapfes Gegenstände z. B. in Werkstätten zu manipulieren. Als volumenveränderlicher Hohlkörper zur Erzeugung eines Unterdrucks werden häufig Kolbenzylinderkombinationen eingesetzt, wobei endseitig eine Öffnung im Zylinderboden vorgesehen ist, wobei sich im Bereich der Öffnung der Saugnapf befindet. Zur Erzeugung des Vakuums ist erforderlich, dass der Kolbenzylinderantrieb einen Kolben aufweist, der gegenüber dem Zylinder eine verhältnismäßig saubere Abdichtung aufweist, um ein entsprechendes Vakuum zu ziehen. Derartige Zylinder bestehen insbesondere aus Metall, wobei zumindest die Kolben ebenfalls aus Metall ausgebildet sind. Solche Saug-Hebevorrichtungen sind entsprechend teuer. Bekannt ist eine solche Saug-Hebevorrichtung aus der DE 900 562 A. Die Steuerung des Saughebers erfolgt hierbei durch einen Elektromagneten, der allerdings lediglich zwei Stellungen annehmen kann.

Aus der FR 2 666 853 A1 ist eine Pumpe bekannt, mit der an einem Einlass ein Unterdruck erzeugt werden kann. Hierbei sind zwei gesonderte elektrische Antriebseinheiten vorgesehen, wobei jede Antriebseinheit einen Kolben aufweist, der zu beiden Seiten mit einem Balg in Verbindung steht. Der Kolben besitzt einen Durchlass, wobei in dem Durchlass Ein- und Auslassventile angeordnet sind. Gleiches gilt sinngemäß für den jeweiligen Balgboden der beiden Bälge. Durch Bewegung des Kolbens wird nun an einem Einlass ein Unterdruck erzeugt. Der Oberbegriff des Anspruchs 1 ist außerdem aus der WO 00/66481 bekannt, die eine andere Saug-Hebevorrichtung offenbart. Auch bekannt ist, bei Saugnäpfen einen Unterdruck dezentral mit Druckluftejektoren bzw. pneumatischen Vakkuumejektoren nach dem Venturi-Prinzip zu erzeugen. Hierfür ist natürlich die Installation eines Druckluftsystems im Unternehmen erforderlich. Druckluftsysteme bzw. mit Druckluft arbeitende Einrichtungen haben nur einen geringen Wirkungsgrad von unter 10 % und sind somit im Betrieb teuer.

Die der Erfindung zugrunde liegende Aufgabe besteht demzufolge darin, in Bezug auf den volumenveränderlichen Raum zur Erzeugung des Unterdruckes eine preisgünstige Lösung zur Verfügung zu stellen, wobei zudem sichergestellt ist, dass die Manipulation von Werkstücken auch dann sicher bewerkstelligt werden kann, wenn die Oberfläche, an der ein Saugelement angreift, rau oder gar porös ist.

Zur Lösung der Aufgabe dient die eingangs genannte Saug-Hebevorrichtung zur Manipulation von Gegenständen, wobei die Vorrichtung eine Einrichtung zur Erzeugung eines Unterdrucks an einem Saugelement umfasst, wobei die Einrichtung zur Erzeugung des Unterdrucks mindestens eine elektromotorische Antriebseinheit sowie mindestens zwei mit der elektromotorischen Antriebseinheit volumenveränderliche, wechselweise mit Unterdruck beaufschlagbare Bälge zur Erzeugung eines permanenten Unterdrucks an dem Saugelement aufweist. Hieraus wird deutlich, dass durch die beiden wechselseitig mit Unterdruck beaufschlagten Bälge an dem Saugelement immer ein Unterdruck anliegt. Denn in dem Moment, in dem der eine Balg mit Unterdruck beaufschlagt wird, und insofern expandiert, wird der andere Balg komprimiert, wohingegen dann, wenn der eine Balg von dem Kompressionsvorgang in den Expansionsvorgang übergeht, der andere Balg komprimiert wird, und insofern der expanierende Balg für den entsprechenden Unterdruck am Saugelement sorgt. Das heißt, dass am Saugelement ein permanenter Unterdruck anliegt. Das hat zur Folge, dass auch im Wesentlichen unebene oder auch poröse Gegenstände in gewissen Grenzen angehoben werden können, da sich der Unterdruck permanent aufbaut, und somit während der Manipulation des Gegenstandes immer ein bestimmter Unterdruck am Saugelement anliegt.

Vorteilhafte Merkmale und Ausgestaltungen der Erfindung ergeben sich aus den Unteransprüchen.

So ist insbesondere vorgesehen, dass die elektromotorische Antriebseinheit mindestens einen elektrischen Linearmotor umfasst, der im Wechsel eine Komprimierung des einen Balges und eine im Wesentlichen gleichzeitige Expansion des anderen Balges vornimmt. Der Linearmotor bewegt sich in einer Ebene, wobei, wenn die beiden Bälge in der gleichen Ebene angeordnet sind, und zwar zu beiden Seiten des Linearmotors, dann wechselweise die entsprechende Komprimierung bzw. Expansion der Bälge erfolgt.

Vorteilhaft ist jeder Balg über eine Saugleitung mit dem Saugelement verbunden. Jedem Balg sind in diesem Zusammenhang zwei gegensinnig arbeitende Ventile zugeordnet, wobei bei Expansion des Balges die Saugleitung durch ein Einlassventil mit dem expandierenden Balg in Verbindung steht, und bei Kompression des entsprechend anderen Balges der komprimierende Balg durch ein Auslassventil mit der Umgebung in Verbindung steht.

Im Einzelnen ist in Bezug auf die Ausbildung der elektromotorischen Antriebseinheit vorgesehen, dass diese zwei gegensinnig bewegliche Kolben aufweist, wobei jeder Kolben mit einem Balg in Verbindung steht. Hierbei weist jeder Balg einen Balgboden auf, wobei in dem Balgboden die gegensinnig arbeitenden Ventile angeordnet sind. Eine besonders vorteilhafte Ausgestaltung der Erfindung zeichnet sich dadurch aus, dass die elektromotorische Antriebseinheit und die mindestens zwei Bälge in einem einzigen Gehäuse untergebracht sind. Mithilfe eines solchen Gehäuses kann nicht nur die Saug-Hebevorrichtung an entsprechenden Gestellen im Bereich des Arbeitsplatzes angeordnet werden, vielmehr schützt dieses Gehäuse auch die Vorrichtung, und hier insbesondere die Bälge.

Als besonders vorteilhaft hat sich herausgestellt, wenn der Balgboden Teil des Gehäuses ist. Dies hat den Vorteil, dass der Linearmotor der elektromotorischen Antriebseinheit keiner Steuerung bedarf, um den jeweiligen Endanschlag zu definieren, da der Endanschlag definiert ist durch den Balgboden, der, wie bereits ausgeführt, vorteilhaft Teil des Gehäuses ist.

Um ein seitliches Ausbrechen des Balges während der Kompression zu verhindern, ist der Balg in einer Gehäusekammer in dem Gehäuse geführt.

Der Balg kann als Falten- oder Wellenbalg ausgebildet sein, wobei der Balg einen mit einem Elastomer beschichteten Festigkeitsträger, z. B. ein Gewebe, aufweist.

Anhand der Zeichnungen wird die Erfindung nachstehend beispielhaft näher erläutert.
- Fig. 1: zeigt die Saug-Hebevorrichtung in einer ersten Stellung;
- Fig. 2: zeigt die Vorrichtung gemäß Fig. 1 in einer zweiten Stellung.

Das Gehäuse zur Aufnahme der Saug- und Hebevorrichtung zur Manipulation von Gegenständen ist insgesamt mit 1 bezeichnet. In dem Gehäuse 1 befindet sich die Einrichtung 10 zur Erzeugung eines Unterdruckes. Die Einrichtung 10 zur Erzeugung eines Unterdruckes umfasst den mit 12 bezeichneten elektrischen Linearmotor, der eine Kolbenstange 13 besitzt, wobei die Kolbenstange 13 endseitig jeweils einen Kolben 14, 15 aufweist. Der Kolben 14, 15 befindet sich jeweils in einer Gehäusekammer 3, 4, wobei sich in der Gehäusekammer 3, 4 auch der entsprechende Balg 20, 21 als Teil der Einrichtung zur Erzeugung eines Unterdruckes befindet.

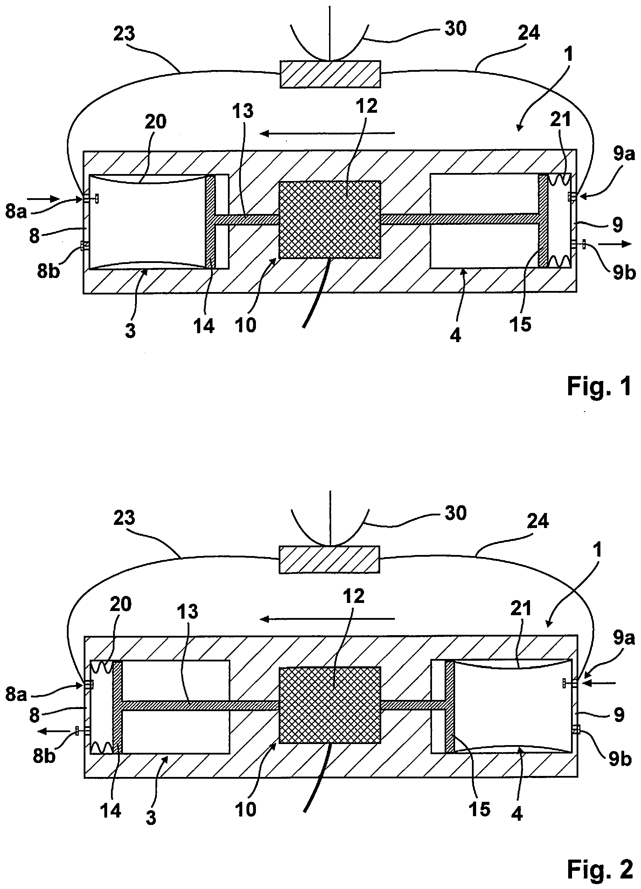

Die Gehäusekammer 3, 4 besitzt den Balgboden 8, 9, wobei der Balgboden 8, 9 Bestandteil des Gehäuses 1 ist. In dem Gehäuseboden 8, 9 befindet sich jeweils ein Einlassventil 8a, 9a sowie ein mit der Umgebung in Verbindung stehendes Auslassventil 8b, 9b. An das Einlassventil 8a, 9a angeschlossen ist jeweils eine Saugleitung 23, 24, die mit dem mit 30 bezeichneten Saugnapf derart in Verbindung steht, dass bei Expansion des jeweiligen Balges 20, 21 der Saugnapf 30 aus einem Elastomer durch die Saugleitungen 23, 24 mit Unterdruck beaufschlagt wird. Bei der Darstellung gemäß Fig. 1 wurde durch den Balg 20 der Saugnapf 30 mit Unterdruck beaufschlagt. Wird nunmehr durch den Linearmotor 12 der Kolben 15 in die Stellung gemäß Fig. 2 überführt, dann wird der Saugnapf 30 durch den Balg 21 mit Unterdruck oder Vakuum beaufschlagt. Durch die wechselweise Komprimierung und Expansion der beiden Bälge 20, 21 ist sichergestellt, dass an dem Saugnapf ein im Wesentlichen immer gleichbleibendes Vakuum anliegt.

### Bezugszeichenliste:

- 1: Gehäuse
- 3: Gehäusekammer
- 4: Gehäusekammer
- 8: Balgboden
- 8a: Einlassventil
- 8b: Auslassventil
- 9: Balgboden
- 9a: Einlassventil
- 9b: Auslassventil
- 10: Einrichtung zur Erzeugung eines Unterdrucks
- 12: elektrischer Linearmotor
- 13: Kolbenstange
- 14: Kolben
- 15: Kolben
- 20: Balg
- 21: Balg
- 23: Saugleitung
- 24: Saugleitung
- 30: Saugelement (Saugnapf)

## Patentansprüche

1. Saug-Hebevorrichtung zur Manipulation von Gegenständen in z. B. Werkstätten, umfassend eine Einrichtung (10) zur Erzeugung eines Unterdruckes an einem Saugelement (30), wobei die Einrichtung (10) zur Erzeugung des Unterdruckes eine Antriebseinheit aufweist,
**dadurch gekennzeichnet,**
**dass** die Antriebseinheit elektromotorisch ausgebildet ist,
sowie mindestens zwei mit der elektromotorischen Antriebseinheit verbundene volumenveränderliche, wechselweise mit Unterdruck beaufschlagbare Bälge (20, 21) zur Erzeugung eines permanenten Unterdruckes an dem Saugelement (30) aufweist,
**dass** die elektromotorische Antriebseinheit zwei gegensinnig bewegliche Kolben (14, 15) aufweist, wobei jeder Kolben (14, 15) mit einem Balg (20, 21) in Verbindung steht.

2. Saug-Hebevorrichtung nach Anspruch 1,
**dadurch gekennzeichnet,**
**dass** die elektromotorische Antriebseinheit mindestens einen Linearmotor (12) umfasst, der im Wechsel eine Komprimierung des einen Balges (20, 21) und eine im Wesentlichen gleichzeitige Expansion des anderen Balges (20, 21) vornimmt.

3. Saug-Hebevorrichtung nach einem der voranstehenden Ansprüche,
**dadurch gekennzeichnet,**
**dass** jeder Balg (20, 21) über eine Saugleitung (23, 24) mit dem Saugelement (30) verbunden ist.

4. Saug-Hebevorrichtung nach einem der voranstehenden Ansprüche,
**dadurch gekennzeichnet,**
**dass** jedem Balg (20, 21) zwei gegensinnig arbeitenden Ventile (8a, 8b; 9a, 9b) zugeordnet sind.

5. Saug-Hebevorrichtung nach Anspruch 4,
**dadurch gekennzeichnet,**
**dass** bei Expansion des Balges (20, 21) die Saugleitung (23, 24) durch ein Einlassventil (8a, 9a) mit dem expandierenden Balg (20, 21) in Verbindung steht.

6. Saug-Hebevorrichtung nach Anspruch 5,
**dadurch gekennzeichnet,**
**dass** bei Komprimierung des Balges (20, 21) der komprimierende Balg durch ein Auslassventil (8b, 9b) mit der Umgebung in Verbindung steht.

7. Saug-Hebevorrichtung nach einem der voranstehenden Ansprüche,
**dadurch gekennzeichnet,**
**dass** jeder Balg (20, 21) einen Balgboden (8, 9) aufweist.

8. Saug-Hebevorrichtung nach Anspruch 7,
**dadurch gekennzeichnet,**
**dass** der Balgboden (8, 9) die gegensinnig arbeitenden Ventile (8a, 8b; 9a, 9b) aufweist.

9. Saug-Hebevorrichtung nach einem der voranstehenden Ansprüche,
**dadurch gekennzeichnet,**
**dass** das Saugelement (30) als Saugnapf ausgebildet ist.

10. Saug-Hebevorrichtung nach einem der Ansprüche 7 bis 9,
**dadurch gekennzeichnet,**
**dass** die elektromotorische Antriebseinheit und die mindestens zwei Bälge (20, 21) in einem Gehäuse (1) angeordnet sind.

11. Saug-Hebevorrichtung nach Anspruch 10,
**dadurch gekennzeichnet,**
**dass** der Balgboden (8, 9) Teil des Gehäuses (1) ist.

12. Saug-Hebevorrichtung nach einem der Ansprüche 10 oder 11,
**dadurch gekennzeichnet,**
**dass** der Balg (20, 21) in dem Gehäuse (1) geführt ist.

13. Saug-Hebevorrichtung nach einem der voranstehenden Ansprüche,
**dadurch gekennzeichnet,**
**dass** der Balg (20, 21) als Falten- oder Wellenbalg ausgebildet ist.

14. Saug-Hebevorrichtung nach einem der voranstehenden Ansprüche,
**dadurch gekennzeichnet,**
**dass** der Balg (20, 21) einen mit einem Elastomer beschichteten Festigkeitsträger aufweist.

## Claims

1. A suction lifting device for manipulating objects, e.g. in workshops, comprising a mechanism (10) for generating a negative pressure at a suction element (30), the mechanism (10) for generating the negative pressure having a drive unit,
**characterized in that**
the mechanism is designed as an electric motor,
and has at least two bellows (20, 21), which are connected to and whose volume can be modified using the electric motor drive unit and which can be alternately impinged with a negative pressure for generating a permanent negative pressure at the suction element (30),
that the electric motor drive unit has two pistons (14, 15) moving in opposite directions, each piston (14, 15) being connected with a bellows (20, 21).

2. The suction-lifting device according to claim 1,
**characterized in that**
the electric motor drive unit comprises at least one linear motor (12), which alternately carries out a compression of the one bellows (20, 21) and a substantially simultaneous expansion of the other bellows (20, 21).

3. The suction-lifting device according to one of the afore-mentioned claims,
**characterized in that**
each bellows (20, 21) is connected with the suction element (30) by way of a suction pipe (23, 24).

4. The suction-lifting device according to one of the afore-mentioned claims,
**characterized in that**
two valves (8a, 8b; 9a, 9b) operating in opposite directions are attributed to each bellows (20, 21)

5. The suction-lifting device according to claim 4,
**characterized in that**
when the bellows (20, 21) expands, the suction pipe (23, 24) is connected with the expanding bellows (20, 21) by way of an inlet valve (8a, 9a).

6. The suction-lifting device according to claim 5,
**characterized in that**
when the bellows (20, 21) is compressed, the compressed bellows is connected with the environment by way of an outlet valve (8b, 9b).

7. The suction-lifting device according to one of the afore-mentioned claims,
**characterized in that**
each bellows (20, 21) features a bellows base (8, 9).

8. The suction-lifting device according to claim 7,
**characterized in that**
the bellows base (8, 9) features the valves (8a, 8b; 9a, 9b) operating in opposite directions.

9. The suction-lifting device according to one of the afore-mentioned claims,
**characterized in that**
the suction element (30) is configured as a suction cup.

10. The suction-lifting cup according to one of the claims 7 to 9,
**characterized in that**
the electric motor drive unit and the at least two bellows (20, 21) are accommodated in a housing (1).

11. The suction-lifting cup according to claim 10,
**characterized in that**
the bellows base (8, 9) is part of the housing (1).

12. The suction-lifting cup according to one of the claims 10 or 11,
**characterized in that**
the bellows (20, 21) is guided in the housing (1).

13. The suction-lifting cup according to one of the afore-mentioned claims,
**characterized in that**
the bellows (20, 21) is designed as a folding or corrugated bellows.

14. The suction-lifting cup according to one of the afore-mentioned claims,
**characterized in that**
the bellows (20, 21) has a reinforcing material coated with an elastomer.

## Revendications

1. Dispositif de levage par aspiration pour la manipulation d'objets, par exemple dans des ateliers, comprenant un mécanisme (10) pour générer une dépression au niveau d'un élément d'aspiration (30), où le mécanisme (10) pour générer la dépression comprend une unité d'entraînement,
**caractérisé en ce que**
l'unité d'entraînement est électromotrice,
et comprend au moins deux soufflets (20, 21) à volume variable reliés à l'unité d'entraînement électromotrice et pouvant être soumis, en alternance, à une dépression pour générer une dépression permanente au niveau de l'élément d'aspiration (30),
l'unité d'entraînement électromotrice comporte deux pistons (14, 15) mobiles dans des directions opposées, où chaque piston (14, 15) est connecté à un soufflet (20, 21).

2. Dispositif de levage par aspiration selon la revendication 1,
**caractérisé en ce que**
l'unité d'entraînement électromotrice comprend au moins un moteur linéaire (12) qui effectue alternativement une compression de l'un des soufflets (20, 21) et une expansion substantiellement simultanée de l'autre soufflet (20, 21).

3. Dispositif de levage par aspiration selon l'une des revendications précédentes,
**caractérisé en ce que**
chaque soufflet (20, 21) est relié à l'élément d'aspiration (30) par une conduite d'aspiration (23, 24).

4. Dispositif de levage par aspiration selon l'une des revendications précédentes,
**caractérisé en ce que**
deux soupapes (8a, 8b ; 9a, 9b) opérant dans des directions opposées sont associées à chaque soufflet (20, 21).

5. Dispositif de levage par aspiration selon la revendication 4,
**caractérisé en ce que**
lors de l'expansion du soufflet (20, 21), la conduite d'aspiration (23, 24) est reliée au soufflet (20, 21) en expansion par une soupape d'admission (8a, 9a).

6. Dispositif de levage par aspiration selon la revendication 5,
**caractérisé en ce que**
lors de la compression du soufflet (20, 21), le soufflet en compression est reliée à l'environnement par une soupape d'échappement (8b, 9b).

7. Dispositif de levage par aspiration selon l'une des revendications précédentes,
**caractérisé en ce que**
chaque soufflet (20, 21) comprend un fond de soufflet (8, 9).

8. Dispositif de levage par aspiration selon la revendication 7,
**caractérisé en ce que**
le fond de soufflet (8, 9) comprend les soupapes (8a, 8b ; 9a, 9b) opérant dans des directions opposées.

9. Dispositif de levage par aspiration selon l'une des revendications précédentes,
**caractérisé en ce que**
l'élément d'aspiration (30) est configuré comme une ventouse.

10. Dispositif de levage par aspiration selon l'une des revendications 7 à 9,
**caractérisé en ce que**
l'unité d'entraînement électromotrice et les au moins deux soufflets (20, 21) sont disposés dans un boîtier (1).

11. Dispositif de levage par aspiration la revendication 10,
**caractérisé en ce que**
le fond de soufflet (8, 9) fait partie du boîtier (1).

12. Dispositif de levage par aspiration selon l'une des revendications 10 ou 11,
**caractérisé en ce que**
le soufflet (20, 21) est guidé dans le boîtier (1).

13. Dispositif de levage par aspiration selon l'une des revendications précédentes,
**caractérisé en ce que**
le soufflet (20, 21) est configuré comme un soufflet à plis ou un soufflet ondulé.

14. Dispositif de levage par aspiration selon l'une des revendications précédentes,
**caractérisé en ce que**
le soufflet (20, 21) comprend un renfort enduit d'un élastomère.
